# EUROPEAN PATENT APPLICATION

(11) **EP 3 438 642 A1**
(43) Date of publication of application: **06.02.2019**
(21) Application number: 17184299.0
(22) Date of filing: 01.08.2017
(51) Int. Cl.: G01N 9/06

(54) **METHOD FOR CALIBRATING A DENSITY SENSOR AND DENSITY SENSOR FOR USE IN SAID METHOD**

(71) Applicant: Alia Instruments Holding B.V., 7521 PH Enschede (NL)
(72) Inventor: PETERS, Jan, 7325 NH Apeldoorn (NL)
(74) Representative: 't Jong, Bastiaan Jacob

(57) **Abstract**

The invention relates to a method for calibrating a density sensor for slurry, which method comprises the steps of:
- providing a density sensor comprising a pipe part, flexible pipe couplings arranged on either end of the pipe part for coupling the pipe part to a feed pipe and a discharge pipe, which pipe couplings impart to the pipe part at least one degree of freedom relative to the feed pipe and the discharge pipe, a first force sensor for measuring a force in the direction of the at least one degree of freedom between the pipe part and a fixed point, such as a floor, and computing means for computing the density of the slurry in the pipe part based the volume of the pipe part and the force measured by the first force sensor, which method comprises the steps of:
- filling the pipe part of the density sensor with a fluid, preferably water;
- attaching a second force sensor and an actuator in series between the pipe part and the fixed point;
- controlling the actuator to generate a force on the pipe part up to a predefined reading of the second force sensor;
- registering the reading of the first force sensor;
- repeating the controlling of the actuator and registering the reading of the first force sensor according to a predefined protocol with a number of values for the second force sensor to obtain a calibration set of combinations of readings from the second force sensor and the first force sensor.

## Description

The invention relates to a method for calibrating a density sensor for slurry. Such density sensors are known from for example EP 0722084 and EP 3066450.

Both prior art density sensors have a pipe part, flexible pipe couplings arranged on either end of the pipe part for coupling the pipe part to a feed pipe and a discharge pipe, which pipe couplings impart to the pipe part at least one degree of freedom relative to the feed pipe and the discharge pipe, a first force sensor for measuring a force in the direction of the at least one degree of freedom between the pipe part and a fixed point, such as a floor, and computing means for computing the density of the slurry in the pipe part based the volume of the pipe part and the force measured by the first force sensor.

Such a density sensor can be used in a static application, wherein the weight of the pipe part, filled with slurry, is measured by the force sensor, such that based on the volume of the pipe part, the density of the slurry can be calculated.

EP 3066450 further proposes to include an accelerometer to be able to measure the weight in a dynamic application, for example on a moving ship, and subsequently determine the density of the slurry.

Such measurements are made for instance on a dredging vessel in order to enable monitoring of the dredging process and to make optimum use of the equipment. During dredging gravel, sand and/or soil are dislodged from the bottom of for instance a waterway and pumped upward with a certain amount of water into the vessel. If the density of this pumped-up slurry is too low, the vessel will be filled mainly with water instead of with gravel, sand and soil.

Gravel, sand and/or soil are also transported in a slurry in the same way in for instance the mining industry, where it is likewise desirable for the purpose of monitoring the process to be able to make a density measurement of the slurry.

However, the weight measurement of the pipe part filled with slurry is, besides movements, also influenced by other factors. For example, the flexibility of the flexible pipe couplings can influence the measurements of the force sensor if the flexibility is not linear to the weight of the pipe part. If for example, the pipe part with slurry is relatively heavy, then the flexible pipe couplings will deform more, than at a lower weight. If the weight is such, that deformation of the flexible pipe couplings reaches the end of deformation, the weight measured by the force sensor is lower, than the actual weight.

An important influence is the pressure of the slurry, which influences the flexibility of the flexible pipe couplings and accordingly the readings of the force sensor.

Also, the temperature of the slurry in the pipe part and pipe couplings can influence the weight. First of all, the slurry could expand more and have a lower density at a high temperature, but also the flexibility of the pipe couplings can be influenced by the temperature.

So, clearly a prior art density sensor as mentioned above, typically does not have a fully linear characteristic between the actual density of the fluid and the force measured by the force sensor, and optionally corrected by the accelerometer measurements. Therefore, such a prior art density sensor needs to be calibrated to obtain a higher accuracy. Also, after prolonged use of a density sensor, the characteristics of for example the flexible pipe couplings could have changed, requiring a re-calibration.

Accordingly, it is an object of the invention to provide a method for calibrating a density sensor for slurry, as known in the prior art.

This object is achieved according to the invention with a method comprising the steps of:
- providing a density sensor comprising a pipe part, flexible pipe couplings arranged on either end of the pipe part for coupling the pipe part to a feed pipe and a discharge pipe, which pipe couplings impart to the pipe part one degree of freedom relative to the feed pipe and the discharge pipe, a first force sensor for measuring a force in the direction of the one degree of freedom between the pipe part and a fixed point, such as a floor, and computing means for computing the density of the slurry in the pipe part based the volume of the pipe part and the force measured by the first force sensor, which method comprises the steps of:
- filling the pipe part of the density sensor with a fluid, preferably water;
- attaching a second force sensor and an actuator in series between the pipe part and the fixed point;
- controlling the actuator to generate a force on the pipe part up to a predefined reading of the second force sensor;
- registering the reading of the first force sensor;
- repeating the controlling of the actuator and registering the reading of the first force sensor according to a predefined protocol with a number of values for the second force sensor to obtain a calibration set of combinations of readings from the second force sensor and the first force sensor.

According to the method of the invention, a second force sensor with an actuator in series is attached between the pipe part and the fixed point. This allows for applying a known force to the pipe part, simulating a known increase in density of the fluid in the pipe part. By registering the reading of the first force sensor and combining this with the known applied force, a calibration set is obtained. This calibration set is then used during normal operation of the density sensor to correct the readings of the first force sensor and to arrive at a more accurate measurement and subsequently determination of the density.

By filling the pipe part with fluid, a fixed weight is already applied to the pipe part and the actuator then only requires to apply variations to the already applied weight.

The actuator could be a hand operated jack like actuator, or could be a hydraulic or pneumatic actuator, such that the method can be performed automatically.

In a preferred embodiment of the method according to the invention the calibration set is stored in the computing means to adjust the readings of the first force sensor.

This allows the computing means to use the calibration set to achieve a higher accuracy when determining the density of the fluid in the pipe part.

In a preferred embodiment of the method according to the invention different flow rates of the fluid are generated through the pipe part according to the predefined protocol when the calibration set is obtained and wherein the flow rates are added to the calibration set.

The flow through the pipe part influences the flexibility of the flexible pipe connections and accordingly the readings of the first force sensor. For example a high flow rate will typically make the flexible pipe connections more stiff.

In yet another embodiment of the method according to the invention a temperature sensor is provided in contact with the fluid in the pipe part and wherein the temperature of the fluid is varied according to the predefined protocol when the calibration set is obtained and wherein the reading of the temperature sensor is added to the calibration set.

In still a further embodiment of the method according to the invention the density of the fluid is varied according to the predefined protocol when the calibration set is obtained and wherein the density is added to the calibration set.

The invention also relates to a density sensor for use in the method according to the invention, which density sensor comprises:
- a pipe part;
- flexible pipe couplings arranged on either end of the pipe part for coupling the pipe part to a feed pipe and a discharge pipe, which pipe couplings impart to the pipe part one degree of freedom relative to the feed pipe and the discharge pipe;
- a first force sensor for measuring a force in the direction of the one degree of freedom between the pipe part and a fixed point, such as a floor; and
- computing means for computing the density of the slurry in the pipe part based the volume of the pipe part and the force measured by the first force sensor
characterized in that
the pipe part is provided with a mounting point for mounting the in series arranged second force sensor and the actuator.

Compared to the density sensors of the prior art, the density sensor according to the invention is provided with a mounting point for arrangement of the second force sensor. This allows for the calibration method to be performed at any time during the life time of the density sensor, simply by arranging the second force sensor to said mounting point and performing the calibration method according to the invention.

In a very preferred embodiment of the method according to the invention different pressures of the fluid are generated in the pipe part according to the predefined protocol when the calibration set is obtained and wherein the fluid pressures are added to the calibration set.

Increasing the fluid pressure in the flexible pipe couplings will reduce the flexibility, such that the reading of the first force sensor will be reduced. By taking the fluid pressure into account when obtaining the calibration set, the density sensor can provide reliable density values with varying fluid pressures.

In a preferred embodiment of the density sensor according to the invention the pipe part and flexible pipe couplings are provided as a flexible hose with a rigid sleeve enveloping the center of the flexible hose and wherein the mounting point is provided on the rigid sleeve.

Using a flexible hose with a rigid sleeve around the center of the hose, provides a reliable connection between a feed pipe and discharge pipe. There are no additional connections between the flexible pipe couplings and the pipe part, which could fail, resulting in a more reliable and leak proof density sensor.

The rigid sleeve allows for strong and reliable connections of the first and second force sensors to the pipe part.

Preferably, a reinforcementlayer is arranged over the ends of the flexible hose and the reinforcement layer extends to and over the edges of the rigid sleeve, leaving at least a part of the rigid sleeve uncovered.

By having the reinforcement layer extending partially over the rigid sleeve ensures that the position of the rigid sleeve relative to the flexible hose is fixed and that said position cannot change over time, which would influence the measurements and accordingly the determination of the density of the fluid. By vulcanizing the reinforcement layer to the flexible hose a solid connection between the two elements is furthermore obtained.

In yet another embodiment of the density sensor according to the invention the density sensor further comprises a housing, wherein the free ends of the flexible pipe couplings extend through the housing walls and wherein an access opening is provided in the housing wall for access to the mounting point.

The housing shields the flexible hose and first force sensor from the ambient influences, which can be hard and extreme. By having an access opening, the second force sensor can still easily be mounted despite the housing.

Preferably, mounting flanges are arranged on the housing for mounting with a feed pipe and a discharge pipe and wherein the free ends of the flexible pipe couplings connect into these mounting flanges.

These and other features of the invention will be elucidated in conjunction with the accompanying drawings.
Figure 1 shows a cross-sectional view of a density sensor according to the invention.
Figure 2 shows the density sensor of figure 1 setup for the calibration method according to the invention.
Figure 3 shows a flow diagram of an embodiment of the method according to the invention.

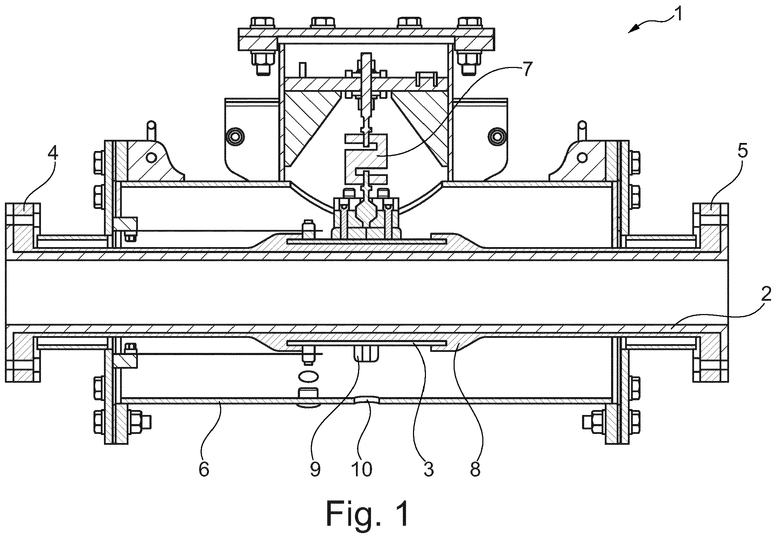

Figure 1 shows a density sensor 1 according to the invention. This density sensor 1 has a flexible hose 2 with a metal sleeve 3 enveloping the center of the flexible hose 2. The flexible hose 2 is provided on each end with mounting flanges 4, 5, which are also attached to the housing 6.

A first force sensor 7 is mounted between the metal sleeve 3 and the housing 6 to measure the weight of the pipe part, which is embodied by the section of the flexible hose 2, which is enveloped by the metal sleeve 3. Both parts of the flexible hose 2 between the metal sleeve 3 and the flanges 4, 5 provide flexible pipe couplings, such that the pipe part, i.e. the metal sleeve 3, can move up and down.

A cover layer 8 is arranged over the flexible hose 2 and partially over the metal sleeve 3 to fix the position of the metal sleeve 3 relative to the flexible hose 2.

The metal sleeve 3 is furthermore provided with a mounting point 9, which is accessible via an opening 10 in the housing wall 6.

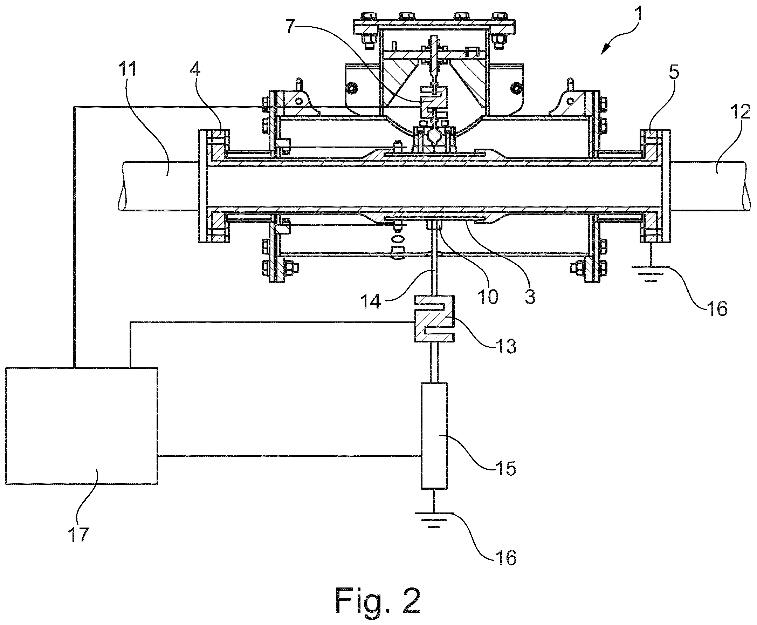

Figure 2 shows the density sensor 1 ready for use in the method according to the invention. A feed pipe 11 is connected to flange 4 and a discharge pipe 12 is connected to flange 5, such that the flexible hose can be filled with a fluid, such as water. It is to be noted that the connection of feed pipe 11 and discharge pipe 12 is arbitrary, as the density sensor functions regardless of the flow direction.

A second force sensor 13 is connected by a connection rod 14 to the mounting point 10. An actuator 15 is furthermore arranged in series with the force sensor 13 and connected to a fixed point 16.

A controller 17 with computing means is provided, which registers the readings of the first force sensor 7 and the second force sensor 13, while actuating the actuator 15 to exert a force on the pipe part 10.

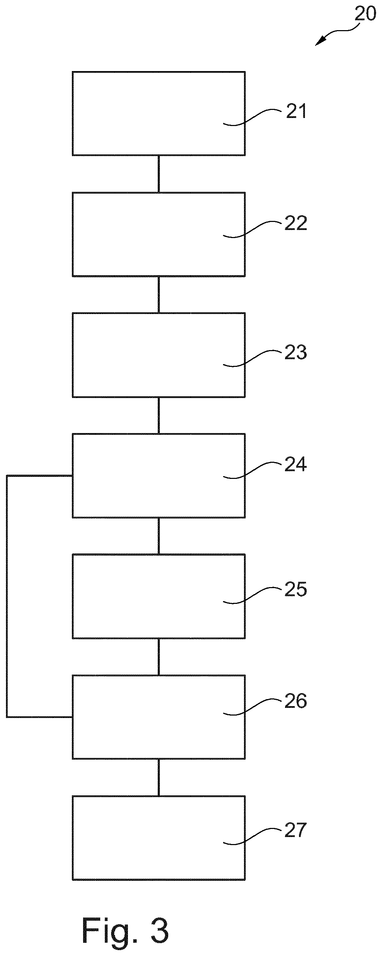

Figure 3 shows a diagram 20 of an embodiment of the method according to the invention. At the first step 21 a density sensor 1 is provided as shown in figure 1 and 2. Then at step 22, the flexible hose 2 and thus the pipe part enveloped by the metal sleeve 3 is filled via the feed pipe 11 with a fluid with a known density, such as water.

The second force sensor 13 and actuator 15 are mounted to the mounting point 10 on the metal sleeve 3 as disclosed in figure 2.

In the next step 24 a value is selected from a predefined protocol. This value is used in step 25 to actuate the actuator 15 such that the second force sensor 13 registers a force corresponding to the value selected in step 24.

Then, at step 26, the value of the first force sensor 7 is registered and combined with the value selected in step 24 to obtain a calibration set. The steps 24, 25, 26 are then repeated to provide sufficient values in the calibration set, after which the calibration set is stored at step 27 in the computing means 17 of the density sensor 1. This allows for the density sensor 1 to calculate with the stored calibration set the density of fluid flowing through at a higher accuracy.

## Claims

1. Method for calibrating a density sensor for slurry, which method comprises the steps of:
- providing a density sensor comprising a pipe part, flexible pipe couplings arranged on either end of the pipe part for coupling the pipe part to a feed pipe and a discharge pipe, which pipe couplings impart to the pipe part one degree of freedom relative to the feed pipe and the discharge pipe, a first force sensor for measuring a force in the direction of the one degree of freedom between the pipe part and a fixed point, such as a floor, and computing means for computing the density of the slurry in the pipe part based the volume of the pipe part and the force measured by the first force sensor, which method comprises the steps of:
- filling the pipe part of the density sensor with a fluid, preferably water;
- attaching a second force sensor and an actuator in series between the pipe part and the fixed point;
- controlling the actuator to generate a force on the pipe part up to a predefined reading of the second force sensor;
- registering the reading of the first force sensor;
- repeating the controlling of the actuator and registering the reading of the first force sensor according to a predefined protocol with a number of values for the second force sensor to obtain a calibration set of combinations of readings from the second force sensor and the first force sensor.

2. Method according to claim 1, wherein the calibration set is stored in the computing means to adjust the readings of the first force sensor.

3. Method according to claim 1 or 2, wherein different pressures of the fluid are generated in the pipe part according to the predefined protocol when the calibration set is obtained and wherein the fluid pressures are added to the calibration set.

4. Method according to any of the preceding claims, wherein different flow rates of the fluid are generated through the pipe part according to the predefined protocol when the calibration set is obtained and wherein the flow rates are added to the calibration set.

5. Method according to any of the preceding claims, wherein a temperature sensor is provided in contact with the fluid in the pipe part and wherein the temperature of the fluid is varied according to the predefined protocol when the calibration set is obtained and wherein the reading of the temperature sensor is added to the calibration set.

6. Method according to any of the preceding claims, wherein the density of the fluid is varied according to the predefined protocol when the calibration set is obtained and wherein the density is added to the calibration set.

7. Density sensor for use in the method according to any of the preceding claims, which density sensor comprises:
- a pipe part;
- flexible pipe couplings arranged on either end of the pipe part for coupling the pipe part to a feed pipe and a discharge pipe, which pipe couplings impart to the pipe part one degree of freedom relative to the feed pipe and the discharge pipe;
- a first force sensor for measuring a force in the direction of the one degree of freedom between the pipe part and a fixed point, such as a floor; and
- computing means for computing the density of the slurry in the pipe part based the volume of the pipe part and the force measured by the first force sensor
**characterized in that**
the pipe part is provided with a mounting point for mounting the in series arranged second force sensor and the actuator.

8. Density sensor according to claim 7, wherein the pipe part and flexible pipe couplings are provided as a flexible hose with a rigid sleeve enveloping the center of the flexible hose and wherein the mounting point is provided on the rigid sleeve.

9. Density sensor according to claim 8, wherein a reinforcement layer is arranged over the ends of the flexible hose and wherein the reinforcement layer extends to and over the edges of the rigid sleeve, leaving at least a part of the rigid sleeve uncovered.

10. Density sensor according to claims 7 - 9, wherein the density sensor further comprises a housing, wherein the free ends of the flexible pipe couplings extend through the housing walls and wherein an access opening is provided in the housing wall for access to the mounting point.

11. Density sensor according to claim 10, wherein mounting flanges are arranged on the housing for mounting with a feed pipe and a discharge pipe and wherein the free ends of the flexible pipe couplings connect into these mounting flanges.
